# EUROPEAN PATENT APPLICATION

(11) **EP 0 899 535 A2**
(43) Date of publication of application: **03.03.1999**
(21) Application number: 97306518.8
(22) Date of filing: 26.08.1997
(51) Int. Cl.: G01B 3/08

(54) **A measuring device**

(30) Priority: 26.08.1997 GB 9618009
(71) Applicant: Money, Arthur Godfrey, Powick, Worcestershire (GB)
(72) Inventor: Money, Arthur Godfrey, Powick, Worcestershire (GB)
(74) Representative: Carter, Gerald

(57) **Abstract**

A measuring device, for use in the game of golf comprises two or more elongate rigid tubular elements (10, 11, 12) which are slidable one within another so as to be telescopically extendable. The elements are marked with a longitudinal measuring scale (27, 28, 29) having units which correspond to the diameter of a standard golf ball. The device is used to ascertain whether a ball is a "gimme", i.e. whether it is within a previously agreed distance from the hole so that the player is not required actually to putt the ball into the hole. In use, a player sets the device to the previously agreed length and then offers the device up to the space between the hole (31) and the ball (30). A "gimme" is conceded if the space is shorter than the length of the device.

## Description

The invention relates to measuring devices and in particular to a device for use in the game of golf.

As is well known, according to the strict Rules of Golf, in order to complete a hole a player is required actually to knock his ball into the hole (unless the player has conceded the hole in match play) and this rule is strictly adhered to in professional and competition golf. In friendly and social games, however, one player will often not require a competing player actually to knock his ball into the hole if he considers that the ball is so close to the hole that it is reasonable to suppose that the putt would be successful. The player will often indicate this to his opponent by knocking the opponent's ball away. Such a situation, where the ball is very close to the hole is colloquially referred to as a "gimme", and the player might say "That's a gimme" as he knocks the ball away.

In some cases, in order to ensure that this concession is given fairly and consistently, particularly in a game with more than two players, the players may agree amongst themselves, before the game, that any ball closer than an agreed distance to the hole will be treated as a "gimme". However in that case dispute, albeit lighthearted, can often arise as to whether or not a particular ball should be regarded as a "gimme", due to the fact that the distance of the ball from the hole is generally judged by eye.

It would therefore be helpful if there were available a measuring device which would be simple and convenient to use to measure the distance of a golf ball from the hole in the event of any dispute. The present invention therefore sets out to provide such a measuring device.

According to the invention, therefore, there is provided a measuring device comprising two or more elongate rigid elements which are slidably connected together so as to be extendable between a collapsed position where the elements are substantially co-extensive and an extended position where the elements are linearly arranged substantially end-to-end, at least certain of said elements being marked with a longitudinal measuring scale.

Thus, in order to ascertain whether a ball is in fact a "gimme", a player sets the device to the previously agreed length and then offers the device up to the space between the lip of the hole and the ball. A "gimme" is conceded if the space is shorter than the agreed length.

The measuring scale may be in any convenient units, for example imperial or metric units of length. However, according to one novel aspect of the present invention, the critical distance for a "gimme" may be specified in terms of diameters of a standard golf ball and, accordingly, the units of the scale may conveniently be ball diameters. Thus, for example, it may conveniently be agreed that the game will be played with "an eight-ball gimme".

Alternatively, different sections of the device may be differently coloured, so that the length of the device is represented by whichever colour is last exposed, or otherwise indicated, when the device is partly extended. In this case it may be agreed, for example, that the game will be played with a "blue gimme", and when testing a ball the device will then be extended until the blue section is exposed or indicated.

Preferably the elements are telescopically slidable, one within another. The elements may be of circular, rectangular or any other cross sectional shape. For example the elements, as viewed in cross-section, may have a part-circular upper wall and a substantially flat bottom wall.

In arrangements where the elements are telescopically slidable, one within another, adjacent elements may be provided with interengageable abutments which come into engagement to prevent complete withdrawal of each element from the adjacent element. For example, an element may be formed with a longitudinal channel along which an abutment on an adjacent element is slidable, there being disposed in said channel a fixed abutment for engagement by said slidable abutment.

In an alternative arrangement according to the invention the elongate elements may lie alongside one another.

The elements may be formed from metal, wood, plastics or any other suitable material.

The measuring scale may be engraved, painted or printed on the material of the elements themselves, or may be engraved, painted or printed on a separate strip of material, for example of metal or paper, which is then affixed to the surfaces of the elements.

To facilitate registering one end of the device with the hole, the device may include, at one end thereof a retaining member for engagement with the lip of the hole. For example, such member may comprise a short arm or abutment projecting at substantially a right angle from one end of one of the elements of the device. The opposite end of the device may have mounted thereon a head piece for gripping when extending the device. The head piece may be decorative and may, for example, itself be in the form of a golf ball.

Spring means may be connected between the elements in a manner to oppose extension of the device and to return the device automatically to the collapsed condition when the elements are released.

In the case where three or more elements are provided, each element may be attached to an adjacent element by a separate spring, the springs being of successively increasing strength so that one element is substantially extended before the next element begins to move. In the case where the elements are telescopic, each spring may be located within an element.

Alternatively, frictional engagement between each element and the adjacent element may be successively greater so that the force applied to each element frilly extends that element, relative to the others, whereafter a slightly greater force must be applied to overcome the frictional restraint of the next successive element.

Although the device according to the invention is preferably extendable, the invention also includes within its scope a one-piece, non-extendable, measuring device having a scale where the units are diameters of a standard golf ball. There may be provided a set of such measuring devices each having a length corresponding to a different number of ball diameters. In this case the players may, before the game, select the appropriate device which represents the agreed length for a "gimme", and this device is then used to settle disputes on this subject throughout the course of the game.

The following is a more detailed description of an embodiment of the invention, by way of example, reference being made to the accompanying drawings in which:
Figure 1 is a longitudinal section through one form of measuring device according to the invention,
Figure 2 is a cross-section of the device along the Line 2-2 of Figure 1,
Figure 3 is a side elevation of the device, showing it extended to measure the distance between a golf ball and hole,
Figure 4 is a plan view of the device showing it extended to measure a different distance between a golf ball and the hole, and
Figure 5 is a part-section of an alternative arrangement showing a form of detent which may be employed between different sections of the device.

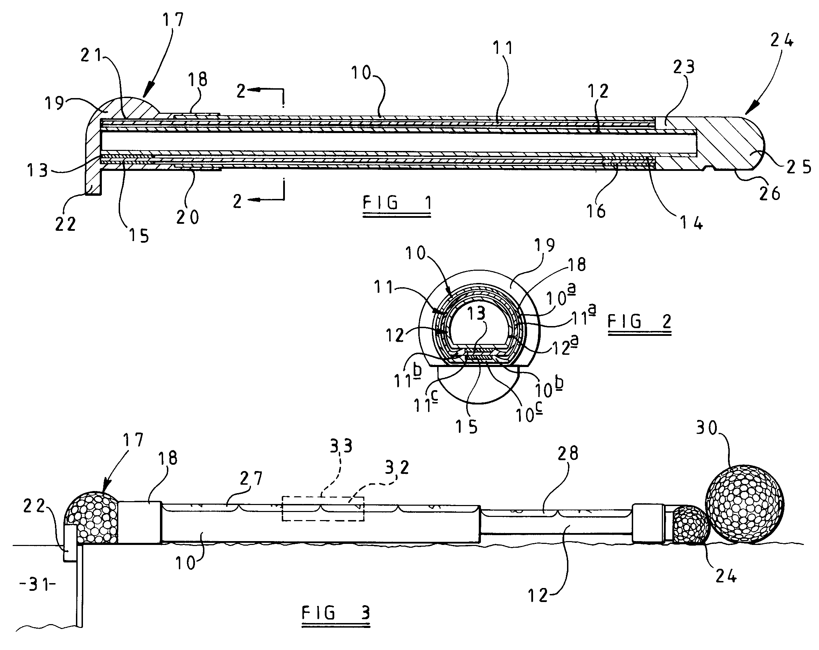

The measuring device comprises three coaxially nested tubes 10, 11 and 12. As may be seen from Figure 2, in cross-section each tube comprises a part-circular upper section 10a, 11a, 12a and a flat lower wall 10b, 11b, 12b. The lower walls 10b, 11b of the two outer tubes are formed with longitudinal grooves 10c, 11c respectively.

The central tube 12 has an abutment strip 13 secured to its underside at the rear end of the tube (at the left in Figure 1). The abutment strip 13 is slidable along the groove 11c in the bottom wall of the adjacent tube 11. At the leading, right hand, end of the tube 11 there is secured within the groove 11c a stop strip 14 which is engageable by the abutment strip 13 on the inner tube 12 to prevent the inner tube 12 being completely withdrawn from the intermediate tube 11.

Similarly an abutment strip 15 is secured to the underside of the rear end of the intermediate tube 11 and is slidable along the groove 10c in the outer tube 10. A stop strip 16 is secured within the leading, right hand end of the groove 10c in the outer tube 10 and is engageable by the abutment strip 15 as it slides along the groove 10c to prevent the intermediate tube 11 being completely withdrawn from the outer tube 10.

As may be seen from Figure 1 there is mounted on the rear, left hand end of the outer tube 10 an end cap 17. The end cap has a socket portion 18 which closely embraces the rear end of the outer tube 10 and a part-spherical portion 19 which is generally in the shape of part of a golf ball. It has an indented outer surface and a flat bottom surface 20. The interior of the part-spherical portion 19 is formed with a further socket 21 which freely receives end portions of the intermediate tube 11 and inner tube 12 which project rearwardly beyond the rear end of the outer tube 10.

The end cap 17 is integrally formed with a short abutment arm 22 which extends downwardly at right angles to the lower surface 20 of the end cap.

At the opposite, leading end of the device the inner tube 12 projects slightly beyond the ends of the intermediate and outer tubes 11, 10 and is embraced by a socket 23 on a leading end cap 24. Attached to the socket 23 is a head portion 25 which, again, is part-spherical with a flat bottom 26 and is indented in its outer surface to resemble a golf ball.

The tubes 10, 11, 12 and end caps 17, 24 may conveniently be formed from plastics material. For example, the tubes may comprise cut lengths of extruded tubing of appropriate cross-sectional shape, and the end caps may be formed by injection moulding. The abutments strips 13, 15 and stop strips 14, 16 may also be formed from plastics, or any other suitable material, and may be secured to their respective tubes by any convenient means. For example, they may be connected by adhesive, welding, riveting or any other suitable method. For example, the abutments or stops may be moulded from plastics and formed with integral projections which are received in holes formed in the walls of the tubes. The end caps 17, 24 may be secured to the ends of the tubes 10 and 12 respectively by any suitable means. For example they might be simply a tight friction fit on the ends of those tubes or may be secured by an adhesive, welding or any other method. The three tubes 10, 11, 12 are longitudinally slidable relatively to one another so that the device may be extended telescopically by holding the end cap 17 and pulling the end cap 24.

There will be a certain amount of frictional engagement between the nested tubes and preferably the frictional engagement between the intermediate tube 11 and the outer tube 10 is slightly greater than the frictional engagement between the inner tube 12 and the intermediate tube 11. With such an arrangement pulling on the end cap 24 first withdraws the inner tube 12 from the intermediate tube 11 until the abutment strip 13 engages the stop strip 14 on the tube 11, whereafter the intermediate tube begins to be withdrawn from the outer tube 10 until the abutment strip 15 engages the stop strip 16 on the outer tube 10. The device is then fully extended.

Alternatively, springs (not shown) may be connected between the inner tube 12 and the intermediate tube 11 and between the intermediate tube 11 and the outer tube 10 so that after the device has been telescopically extended, the device automatically retracts to the closed position when the end caps are released. Preferably the spring connecting the intermediate tube 11 to the outer tube 10 is stronger than the spring connecting the inner tube 12 to the intermediate tube 11 so that, again, the inner tube is frilly extended before the intermediate tube 11 begins to be withdrawn from the outer tube 10.

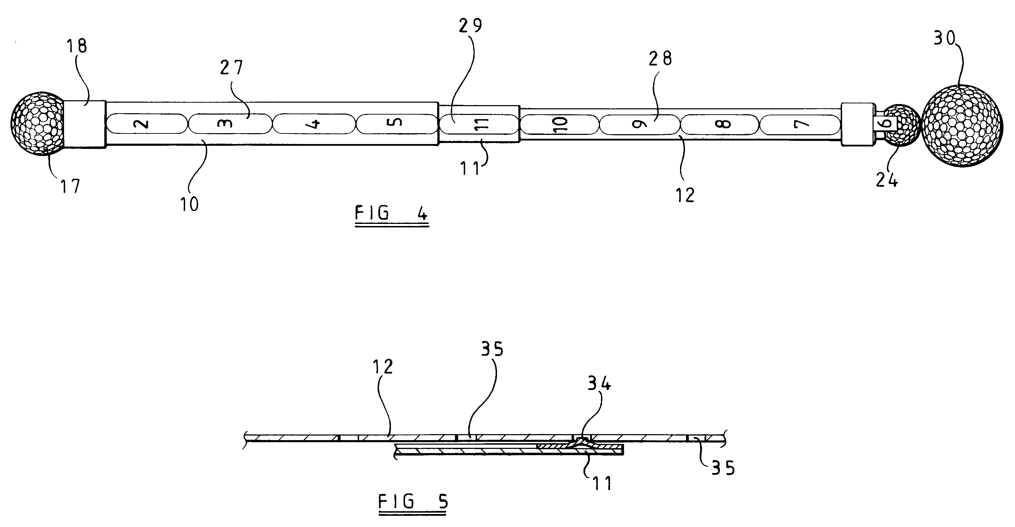

In the retracted position shown in Figure 1, the closed length of the device, between the inner surface of the abutment 22 and the extremity of the end cap 24 is equal to six diameters of a standard golf ball. For example, the length of the end cap 17, measured from the inner face of the abutment 22, may be equivalent to one ball diameter, the overall length of the end cap 24 may be equivalent to one ball diameter and the exposed portion of the outer tube 10, between the end caps, may have a length equivalent to four ball diameters. The outer surfaces of the end caps and outer tube 10 may be marked to indicate these diameters, as shown at 27 in Figures 3 and 4.

The outer surfaces of the inner tube 12 and intermediate tube 11 are also marked in ball diameters, as indicated at 28 and 29 in Figures 3 and 4.

Figure 3 shows the device in position ready to measure the distance between a golf ball 30 and a hole 31 on the green. For this purpose the arm 22 is hooked over the lip of the hole 31 nearest to the ball 30 and the end cap 24 of the device is then pulled away from the hole until the device is extended to the previously agreed length. If the device extends past the ball it is a "gimme", whereas if it does not reach the ball it is not a "gimme" and the ball must be putted into the hole.

As the end cap 24 is pulled away from the hole 31 the device extends telescopically as shown in Figure 3. The intermediate tube 11 is first restrained within the outer tube 10, either frictionally or by a spring, and the inner tube 12 alone is withdrawn.

In the position shown in Figure 3, the ball 30 is eight ball diameters from the hole so that when the end cap 24 touches the ball 30 a portion of the inner tube 12 marked with an "8" is exposed. Up to a distance of ten ball diameters only the inner tube 12 is withdrawn. If the distance of the ball 30 is more than ten diameters from the hole 31 continued movement of the end cap 24 towards the ball begins to withdrawn the intermediate tube 11 from the outer tube 10 as shown in the plan view of Figure 4. In Figure 4 the ball 30 is twelve ball diameters from the hole 31 so that the marking "12" is exposed on the intermediate tube 11. The length of the extended device, in ball diameters is the largest number which is exposed as the device is extended.

If desired, means may be provided so that the tubes "click" into position as the device is extended to each successive ball diameter. Such an arrangement is shown in Figure 5 where the intermediate tube 11 has mounted on it a plastics spring device 34 which may snap into any one of a series of longitudinally spaced holes 35 in the bottom wall of the inner tube 12. The inner tube 12 may be withdrawn by pulling on the tube with sufficient strength to overcome the resilient restraint provided by the element 34, but a temporary restraint is provided, by the element 34 snapping into a hole 35, each time the tube 12 is extended by another ball diameter.

A similar arrangement is provided between the outer tube 10 and the intermediate tube 11. This device may be arranged to provide a stronger restraint than the device between the intermediate tube 11 and the inner tube 12, to ensure that the intermediate tube does not begin to be withdrawn until alter the inner tube has been completely withdrawn.

Although ball diameters is a convenient unit for measurement, it will be appreciated that the scale could also be in metric, imperial, or indeed any other units, or may be in differently coloured sections, as previously described.

Although the device is shown with three telescopic sections, any other convenient number of such sections may be provided. Also the tubes 10, 11, 12 need not be part-circular in cross-section but could be of rectangular, triangular or any other cross-section.

Instead of being tubular and telescopic, the sliding elements of the device may simply he alongside one another, being connected by any appropriate sliding mechanism.

The measuring device according to the invention is particularly suitable for a promotional or advertising device and may bear promotional material on the sides of the tubes in addition to the scales. For example, a "saddle" may be attached to the outer tube 10, for example by an adhesive, as indicated at 32 in Figure 3, the saddle having a flat upper surface 33 on which the promotional material may be applied or printed.

Although the device is particularly suitable for manufacture from plastics material, a higher quality device could be produced where the tubes are metal, such as brass or stainless steel, or polished wood bound with brass. For promotional purposes the device can be referred to as a "Gimmi-Stik".

## Claims

1. A measuring device characterised by two or more elongate rigid elements (10, 11, 12) which are slidably connected together so as to be extendable between a collapsed position where the elements are substantially co-extensive and an extended position where the elements are linearly arranged substantially end-to-end, at least certain of said elements being marked with a longitudinal measuring scale (27, 28, 29).

2. A measuring device according to Claim 1, wherein said measuring scale (27, 28, 29) is marked in units corresponding to the diameter of a standard golf ball.

3. A measuring device according to Claim 1 or Claim 2, wherein said measuring scale (27, 28, 29) is marked in units of different colours.

4. A measuring device according to any of the preceding claims, wherein the elements (10, 11, 12) are telescopically slidable, one within another.

5. A measuring device according to Claim 4, wherein the elements (10, 11, 12), as viewed in cross-section, have a part-circular upper wall (10a, 11a, 12a) and a substantially flat bottom wall (10b, 11b).

6. A measuring device according to Claim 4 or Claim 5, wherein adjacent elements (10, 11, 12) are provided with interengageable abutments (13, 14; 15, 16) which come into engagement to prevent complete withdrawal of each element from the adjacent element.

7. A measuring device according to Claim 6, wherein at least one element (10, 11, 12) is formed with a longitudinal channel (10c, 11c) along which an abutment (13, 15) on an adjacent element is slidable, there being disposed in said channel a fixed abutment (14, 16) for engagement by said slidable abutment.

8. A measuring device according to any of the preceding claims, wherein the device includes, at one end thereof, a retaining member (22) for engagement with the lip of a hole (31).

9. A measuring device according to Claim 8, wherein said retaining member comprises a short arm or abutment (22) projecting at substantially a right angle from one end of one of the elements (10) of the device.

10. A measuring device according to Claim 8 or Claim 9, wherein said retaining member (22) is formed on an end cap (17) attached to one of said elements (10) of the device.

11. A measuring device according to any of Claims 8 to 10, wherein the end of the device opposite said retaining member (22) has mounted thereon a head piece (24) for gripping when extending the device.

12. A measuring device according to Claim 10 or Claim 11, wherein said end cap (17) and/or said head piece (24) is at least partly in the shape of a golf ball.

13. A measuring device according to any of the preceding claims, wherein spring means are connected between the elements (10, 11, 12) in a manner to oppose extension of the device and to return the device automatically to the collapsed condition when the elements are released.

14. A measuring device according to Claim 13, wherein three or more elements (10, 11, 12) are provided, and each element is attached to an adjacent element by a separate spring, the springs being of successively increasing strength so that one element is substantially extended before the next element begins to move.

15. A measuring device according to any of the preceding claims, wherein three or more elements (10, 11, 12) are provided, and frictional engagement between each element and the adjacent element is successively greater so that the force applied to each element frilly extends that element, relative to the others, whereafter a slightly greater force must be applied to overcome the frictional restraint of the next successive element.
